# EUROPEAN PATENT SPECIFICATION

(11) **EP 0 802 232 B1**
(45) Date of publication and mention of the grant of the patent: **20.09.2000**
(21) Application number: 97106259.1
(22) Date of filing: 16.04.1997
(51) Int. Cl.: C08L 83/04, C08L 83/08, C08K 9/06, C09C 1/30

(54) **Compositions comprising fluorinated and non-fluorinated polyorganosiloxanes with high tear strength and consistency**
Fluorierte und nichtfluorierte Siloxane enthaltende Organosiloxanzusammensetzungen mit hoher Reissfestigkeit und Konsistenz
Compositions d'organosiloxane, contenant des siloxanes fluorinés et non-fluorinés, à haut résistance à la déchirure et de haute consistance

(30) Priority: 19.04.1996 US 635357
(43) Date of publication of application: 22.10.1997
(73) Proprietor: DOW CORNING CORPORATION, Midland Michigan 48686-0994 (US)
(72) Inventor: Irish, Paul Thomas, Bay City, Michigan 48708 (US); Maxson, Myron Timothy, Sanford, Michigan 48657 (US)
(74) Representative: Fleischer, Holm Herbert, Dr.

(56) References cited:
- EP-A- 0 337 790
- EP-A- 0 491 510
- EP-A- 0 569 125
- US-A- 4 960 811
- US-A- 5 302 632
- DATABASE WPI Section Ch, Week 8733 Derwent Publications Ltd., London, GB; Class A26, AN 87-233052 XP002035565 & JP 62 158 755 A (TOSHIBA SILICONE KK) , 14 July 1987 & PATENT ABSTRACTS OF JAPAN vol. 11, no. 398 (C-466), 25 December 1987 & JP 62 158755 A (TOSHIBA SILICONE CO.LTD.), 14 July 1987,

## Description

The present invention is a high-consistency organosiloxane composition comprising fluorinated and non-fluorinated polyorganosiloxanes, which upon addition of suitable cure components is cured to form elastomers having improved tear strength and good resistance to hydrocarbon oil. The claimed composition comprises a reinforcing silica filler that has been treated with a tetraalkyldisilazane.

Curable compositions containing mixtures of fluorinated and non-fluorinated high consistency polydiorganosiloxanes are known. One common repeating unit present in fluorinated polydiorganosiloxanes is methyl-3,3,3-trifluoropropylsiloxy. When compared with cured elastomers from polydimethylsiloxanes, elastomers prepared from fluorinated polydiorganosiloxanes exhibit inferior physical properties such as tensile and tear strengths or elasticity. They also have a higher solubility in polar organic liquids such as alcohols, ketones and esters. This reduction in properties is compensated by a lower solubility and higher resistance to degradation in aliphatic hydrocarbons that are present in aviation and automotive oils or fuels.

High-consistency fluorinated and non-fluorinated polydiorganosiloxanes, when cured, typically provide an elastomer with physical properties that represent a compromise, with intermediate values for tensile and tear strengths or solvent resistance. One approach to increasing these properties is to increase the compatibility of the polymers. For example, U.S. Patent 4,960,811 describes a composition where 100 parts of a modified fluorinated polydiorganosiloxane, containing both vinyl and silanol groups, is blended with from one to 10 parts of a polydimethylsiloxane gum containing from one to 10 weight percent of vinyl radicals.

Another approach is disclosed in U.S. Patent 5,302,632. The improved compatability therein is achieved by blending the polymers together with a reinforcing silica filler that is reacted with both fluorinated and non-fluorinated liquid polydiorganosiloxanes as filler treating agents. These high consistency polydiorganosiloxanes contain at least two alkenyl radicals per molecule and are cured by a hydrosilation reaction.

We have found that the tear strength of compositions comprising a high-consistency fluorinated and non-fluorinated polydiorganosiloxane are unexpectedly improved by treating the reinforcing silica filler with tetraalkyldisilazane. The improved tear strength is surprisingly achieved while maintaining a good resistance to hydrocarbon oil.

The present invention is a high-consistency organosiloxane composition, which upon the addition of suitable cure components, is cured to form fluorinated silicone elastomers having improved tear strength and good resistance to hydrocarbon oil weep. The high-consistency organosiloxane composition is prepared by blending components comprising:
(A) 60 to 90 weight percent, based upon the combined weight of components (A) and (B), of a component containing at least one high-consistency fluorine-containing polydiorganosiloxane comprising at least two alkenyl radicals per molecule and repeating units described by formula R¹R^{f}SiO, where R¹ is an alkyl radical comprising from one to four carbon atoms and R^{f} is a perfluoroalkylethyl radical comprising from three to 12 carbon atoms;
(B) 10 to 40 weight percent, based on the combined weight of components (A) and (B), of a component containing at least one high consistency fluorine-free polydialkylsiloxane containing at least two alkenyl radicals per molecule, where the repeating units of the fluorine-free polydialkylsiloxane are described by formula R¹₂SiO and R¹ is as previously described; and
(C) 10 to 50 weight percent, based on the combined weight of components (A) and (B) of a reinforcing silica filler having a surface area of at least 50 m²/g, wherein the filler is treated with one to 50 weight percent, based on the weight of the reinforcing silica filler, of a tetraalkyldisilazane described by formula R¹₂HSiNHSiR¹₂H, where R¹ is as previously described.

In this specification, the term "high-consistency" refers to polydiorganosiloxanes having the consistency of a gum at 25°C. The viscosities of such polymers are typically a Williams Plasticity Number that is measured by ASTM Standard D926. This number is from 75 to 400 mm at 25°C. for the fluorine-containing polydiorganosiloxane and from 50 to 350 mm at 25°C for the fluorine-free polydialkylsiloxane.

The present composition includes at least one high consistency fluorine-containing polydiorganosiloxane, component (A), and at least one fluorine-free polydialkylsiloxane, component (B). Component (A) comprises from 60 to 90 weight percent of the combined weight of components (A) and (B), and conversely component (B) comprises 10 to 40 weight percent of the combined weights.

Both components (A) and (B) contain compounds having at least two alkenyl radicals per molecule. Depending upon the physical properties desired in the cured elastomer of the present composition, up to three percent of the non-terminal repeating units of these polymers contains silicon-bonded alkenyl radicals.

A portion of the repeating units of the compounds in component (A) correspond to the formula R¹R^{f}SiO, where R¹ is an alkyl radical comprising from one to four carbon atoms and R^{f} is a perfluoroalkylethyl radical where the silicon atom is separated from the perfluoroalkyl radical by two non-fluorinated carbon atoms.

The perfluoroalkyl portion of R^{f} contains from one to 10 carbon atoms and includes perfluoromethyl, perfluoroethyl, perfluorobutyl and perfluorooctyl. R¹ is methyl, ethyl, propyl, butyl and tert-butyl. Preferably R^{f} is 3,3,3-trifluoropropyl and R¹ is methyl.

A preferred component (A) contains at least one polydiorganosiloxane as described by the general formula 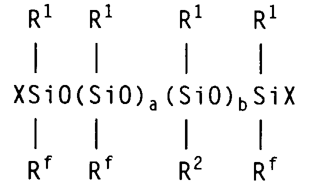 where R¹ and R^{f} are as previously described, R² is an alkenyl radical comprising two to 10 carbon atoms, each X is independently selected from hydroxy or R², the sum of a and b is such that the polymer has a Williams Plasticity Number of from 75 to 400 mm at 25°C. and the value of b/(a+b) is from 0 to 0.03, with the proviso that when X is a hydroxy group, b is at least 2. Alternatively, the terminal group can be XR¹₂SiO, where R¹ and X are as previously described.

The alkenyl radicals represented by R² comprise two to 10 carbon atoms. R² is vinyl, allyl, butenyl, hexenyl and decenyl. When R² is other than vinyl or allyl, the ethylenically unsaturated carbon atoms are preferably located at the terminal position of the molecule.

In a preferred composition, component (A) is a mixture comprising 20 to 60 weight percent of hydroxy-terminated fluorine-containing polydiorganosiloxanes where b is 0 and 40 to 80 weight percent of hydroxy-terminated fluorine-containing polydiorganosiloxanes where b/(a+b) is an average value within a range of 0.001 to 0.02. Most preferred is where component (A) is a mixture comprising 50 weight percent of hydroxy-terminated fluorine-containing polydiorganosiloxanes where b is 0 and 50 weight percent of hydroxy-terminated fluorine-containing polydiorganosiloxanes where b/(a+b) is an average value within a range of 0.001 to 0.02. Preferred is when component (A) has a Williams Plasticity Number within a range of 220 to 280 mm at 25°C.

The compounds of component (B) comprise repeating units of the formula R¹₂SiO, where each R¹ is an independently selected alkyl radical comprising one to four carbon atoms. Preferred is when R¹ is methyl.

A preferred component (B) contains at least one fluorine-free dimethylsiloxane described by formula 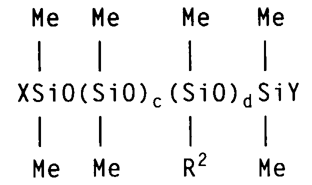 where Me is methyl, R² is an alkenyl radical comprising two to 10 carbon atoms as previously described, each Y is independently selected from hydroxy or R², the sum of c and d is such that the polymer has a Williams Plasticity Number within a range of 50 to 350 mm at 25°C. and the value of d/(c+d) is from 0 to 0.03, with the proviso that d is at least 2 when Y is a hydroxy group. A more preferred component (B) is a mixture comprising 50 weight percent of fluorine-free dimethylsiloxanes where Y is vinyl and d=0 and 50 weight percent of fluorine-free dimethylsiloxanes where Y is vinyl and d/(c+d) is a value of 0.002. Preferred is when component (B) has a Williams Plasticity Number within a range of 120 to 200 mm at 25°C.

The present compositions require the presence of a reinforcing silica filler which improves the physical strength of cured silicone elastomers prepared from our curable composition. The reinforcing silica filler is of the fumed or precipitated type and has a BET surface area of at least 50 m²/g. Preferably, the reinforcing silica filler has a surface area within a range of 50 to 400 m²/g. Most preferred is when said filler has a surface area greater than 100 m²/g. Especially preferred is when said filler has a surface area within a range of 200 to 400 m²/g.

The amount of reinforcing silica filler added to our composition is from 10 to 50 weight percent, based on the combined weight of components (A) and (B). Preferred is when the filler is 15 to 25 weight percent of the weights of (A) and (B).

Reinforcing silica fillers are typically treated with a low molecular weight organosilicon compound to prevent a phenomenon referred to as "creping" or "crepe hardening". These treating agents reduce the interaction between the polydiorganosiloxane and the silica which causes the curable composition to undergo an increase in viscosity during blending or storage of the composition. This viscosity increase can increase to the extent that the composition cannot be processed using conventional techniques and equipment. The advantages of our claimed composition are obtained by utilizing a specific class of compounds referred to as tetraalkyldisilazanes as a treating agent for our reinforcing silica filler. The tetraalkyldisilazanes are described by formula R¹₂HSiNHSiR¹₂H, where each R¹ is an independently selected alkyl radical comprising from one to four carbon atoms. Preferred is when the tetraalkyldisilazane is tetramethyldisilazane.

The concentration of tetraalkyldisilazane useful in the present composition is within a range of 1 to 50 weight percent of the weight of the reinforcing silica filler. Preferred is when the tetraalkyldisilazane concentration is within a range of 5 to 15 weight percent of the weight of the filler.

In addition to tetraalkyldisilazane, other silica treating agents may be used in the present compositions. In a preferred composition, a hydroxy-terminated methylvinylsiloxane described by formula 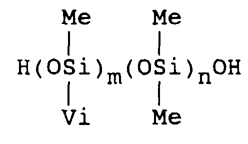 where Me is methyl, Vi is vinyl, m is a value from 1 to 8, n is a value from 0 to 7 and m+n is a value from 5 to 8, is also included in the composition. This hydroxy-terminated methylvinylsiloxane treating agent comprises 0.5 to 10 weight percent of the weight of the reinforcing silica filler. More preferred is a composition where the hydroxy-terminated methylvinylsiloxane treating agent comprises 1 to 5 weight percent of the weight of the reinforcing silica filler.

The claimed compositions are cured by adding standard curing agents suitable for cure to form silicone elastomers. One suitable curing agent for our curable compositions is organic peroxides. One class of organic peroxides are vinyl-specific and require the presence of vinyl or other alkenyl radicals substituted on the polydiorganosiloxane polymers. The second class of these peroxides are non-vinyl specific and react with any type of hydrocarbon radical to generate a free radical which can effect crosslinking.

The peroxide catalysts include di-tertiary-butyl peroxide, tertiary-butyl-triethylmethyl peroxide, tertiary-butyl-tertiary-triphenyl peroxide, t-butyl perbenzoate and di-tertiary alkyl peroxides such as dicumyl peroxide or 2,5-bis(tert-butyl peroxy)-2,3-dimethylhexane. Other suitable peroxide catalysts, which effect curing through saturated as well as unsaturated hydrocarbon groups on the siloxane chains, are aryl peroxides such as benzoyl peroxides, mixed alkyl-aryl peroxides such as tertiary-butyl perbenzoate, chloroalkyl peroxides such as 1,4-dichlorobenzoyl peroxide, 2,4-dichlorobenzoyl peroxide, monochlorobenzoyl peroxide and benzoyl peroxide. A preferred peroxide catalyst herein is 2,5-bis(tert-butyl peroxy)-2,3-dimethylhexane. Generally, 0.1 to 10 weight percent of the peroxide, based on total weight of the composition, is effective to cure the present compositions.

The claimed compositions are also cured by means of a platinum-group metal-catalyzed hydrosilation reaction using an organohydrogensiloxane as crosslinker. To effect cure of the present composition, the organohydrogensiloxane must contain more than two silicon-bonded hydrogen atoms per molecule. Preferably, this organohydrogensiloxane contains from four to 20 silicon atoms per molecule and has a viscosity of up to 10 Pa·s at 25°C., inclusive. The silicon-bonded organic groups present in the organohydrogensiloxane are substituted or unsubstituted alkyl radicals comprising one to four carbon atoms that are free of ethylenic or acetylenic unsaturation. The units of the organohydrogenpolysiloxane include HSiO_{3/2}, R³HSiO and R³₂HSiO_{1/2}, in addition to one or more of monoorganosiloxy, diorganosiloxy, triorganosiloxy and SiO_{4/2} units. The substituent R³ is the same as R¹ or R^{f}, as previously described. To ensure adequate curing of our composition, it is preferable that the hydrocarbon radical of the organohydrogensiloxane is selected from methyl or 3,3,3-trifluoropropyl.

Alternatively, the organohydrogensiloxane is a cyclic compound comprising diorganosiloxy and organohydrogensiloxy units or a branched compound described by formula Si(OSiR³₂H)₄, where R³ is as previously described.

The molar ratio of silicon-bonded hydrogen atoms to the total concentration of vinyl or other alkenyl radicals in all of the high consistency polydiorganosiloxanes (components (A) and (B)) is important to the desired properties of the cured silicone elastomers. The optimum ratio for our compositions is determined at least in part by the concentration of ethylenically unsaturated hydrocarbon substituents in components (A) and (B) and the type of organohydrogensiloxane crosslinker. Generally, a useful molar ratio of silicon-bonded hydrogen atoms to alkenyl radicals provided by components (A) and (B) is within a range of 1:1 to 5:1.

Platinum-group metal-containing catalysts useful to catalyze the present compositions are any of those known to catalyze the reaction of silicon-bonded hydrogen atoms with silicon-bonded alkenyl groups. By "platinum group metal", it is meant ruthenium, rhodium, palladium, osmium, iridium and platinum. Examples of useful platinum-group metal-containing catalysts are found in U.S. Patents 3,989,668; 5,036,117; 3,159,601; 3,220,972; 3,296,291; 3,516,946; 3,814,730 and 3,928,629, all of which show useful catalysts and methods for their preparation.

The preferred platinum-group metal is platinum. Therefore, a preferred hydrosilation catalyst for curing the present composition is selected from a group consisting of platinum metal, platinum compounds and platinum complexes. Platinum compounds, such as chloroplatinic acid, chloro-platinic acid hexahydrate and platinum dichloride, and particularly complexes of such compounds with low-molecular weight vinyl-containing organosiloxanes, are preferred catalysts because of their high activity and compatibility with the organosiloxanes used herein. These complexes are generally described in U.S. Patent 3,419,593. Complexes with low-molecular weight organosiloxanes, where the silicon bonded hydrocarbon radicals are vinyl and either methyl or 3,3,3-trifluoropropyl, are particularly preferred because of their ability to catalyze a rapid cure of the claimed compositions at temperatures of 70°C. or greater.

The platinum-group metal-containing catalyst used in the present invention may also be microencapsulated in a thermoplastic organic or organosilicon resin as a matrix or shell type of structure. Microencapsulated platinum-group metal hydrosilation catalysts, together with methods for their preparation, are more fully described in U.S. Patent 4,784,879, which is very useful in preparing the present composition.

Another preferred platinum-group metal-containing catalyst for the present compositions comprises the reaction product of chloroplatinic acid with dimethylvinylsiloxy terminated polymethyl(3,3,3-trifluoropropyl)siloxane.

This catalyst is added to the present compositions in an amount equivalent to as little as 0.001 part by weight of elemental platinum-group metal, per one million parts (ppm) of the composition. Preferably, the concentration of platinum-group metal is that providing the equivalent of at least 1 ppm of elemental platinum-group metal. A catalyst concentration providing the equivalent of 3 to 50 ppm of elemental platinum-group metal in our composition is preferred.

When the present composition is mixed with an organohydrogensiloxane crosslinker and a platinum group metal-containing catalyst, the composition may cure at room temperature. Therefore, to increase the storage stability or obtain a longer working time, it is useful to add a catalyst inhibitor to our curable composition. Such platinum-group metal-containing catalyst inhibitors are known in the art and include acetylenic compounds as disclosed in U.S. Patent 3,445,420. Acetylenic alcohols, such as 2-methyl-3-butyn-2-ol and 1-ethynyl-1-cyclohexanol, are preferred inhibitors that will suppress the activity of a platinum-containing catalyst at ambient temperatures while allowing cure to proceed rapidly at temperatures of 70°C. or above.

Other catalyst inhibitors used in the claimed compositions include those described in U.S. Patents 5,036,117; 4,584,361 and 3,989,667.

The amount of inhibitor required is that needed to produce the desired shelf-life and/or pot-life; and yet, to not extend the required cure time to an impractical level. This amount will vary widely and depends upon the particular inhibitor used, the nature and concentration of the catalyst and the organohydrogensiloxane crosslinker employed. Inhibitor concentrations as small as one mole of inhibitor per mole of platinum group metal will in some instances cause a satisfactory inhibition of the catalyst. In other cases, as much as 500 moles of inhibitor for every mole of catalyst is needed to achieve the desired combination of pot life and cure time.

To further provide for improved shelf stability of our compositions when compounded with a catalyst, the curable composition is packaged in two parts with the platinum-group metal-containing catalyst in one part and the organohydrogensiloxane crosslinker in the other part.

In addition to the above components, compositions prepared by the present method can have added to them optional ingredients such as heat stabilizers, pigments, flame-retardants, electrically conductive materials and thermally conductive materials.

In a preferred method, the reinforcing silica filler is first treated with the tetraalkyldisilazane and optionally other silica treating agents, in the presence of components (A) and (B) by mixing under relatively high shear using a sigma-blade mixer. This mixing operation is continued until the filler is completely treated and uniformly dispersed throughout our composition to form a homogeneous material. The operation requires anywhere from 15 minutes to 2 hours, depending upon such factors as the amount of material processed, the material viscosity and the mixer shear rate.

Alternatively, the reinforcing silica filler is treated with tetraalkyldisilazane, and optionally other silica treating agents, before mixing with the high-consistency organosiloxane components (A) and (B).

It is preferred that the latter mixing operation be conducted at a temperature within a range of 100 to 250°C. under reduced pressure to remove volatiles from the processed composition.

Our curable compositions are prepared by blending the resultant homogeneous mixture of polymers and treated filler with the above curing agents. If a microencapsulated catalyst is used, care should be taken during incorporation of this ingredient to avoid rupturing the microcapsules and the potential release of catalyst.

The following examples are provided to further illustrate this invention. The reported Williams Plasticity Numbers were measured using ASTM Standard D926, with the testing conducted at a temperature of 25°C.

A base composition was prepared as described in Table 1. Components 1 through 5 were added to a sigma-blade mixer and mixed for 5 minutes with a nitrogen purge. Water (component 9) was then added to this mixer and mixing continued for an additional 5 minutes. Components 7 and 8 were next added to the mixer and mixing continued for another 5 minutes. The reinforcing silica filler was subsequently added to the mixer slowly to keep the forming base massed. After completion of filler addition, hexamethyldisilazane (HMDS) was used to form a reference composition. Thereafter, tetramethyldisilazane (TMDS), or both HMDS and TMDS as described in Table 2, were added to the mixer and mixing continued for 30 minutes. The mixture was then heated to a temperature of 175 to 185°C. with a nitrogen purge and mixing continued for 3 hours. The resulting base was cooled with continuing mixing. After cooling the base, a curable composition was made by mixing into each 100 weight parts of the base, 1 weight part of 2,5-bis(tert-butyl peroxy)-2,3-dimethylhexane as catalyst and 1 weight part of a 50 weight percent composition of cerium hydrate in a dimethylhydroxysiloxy-terminated polydimethylsiloxane gum having a Williams Plasticity Number of 152 to 178 mm. Samples of the catalyzed composition were press cured at 171°C. for 10 minutes and then post cured at 200°C. for four hours in a hot air oven. The potential for weep of the cured samples was tested by immersing the samples in a commercially available hydrocarbon automotive engine oil (5W30 weight) at 150°C. for 96 hours. The percent weight gain of the sample was determined as an indication of the potential for hydrocarbon oil weep and is reported in Table 2. Other physical properties of the samples were tested by standard methods. The test methods and the results of testing are also reported in Table 2.

**Table 1**

| Formulation of Tested Compositions | | |
|---|---|---|
| No. | Parts(wt.) | Component Description |
| 1 | 28.46 | Methyltrifluoropropylhydroxysiloxy-terminated methyltrifluoropropyl(methylvinyl)polysiloxane comprising 0.6 mole percent MeViSiO units and having a Williams Plasticity Number of 229 to 279 mm |
| | | |
| 2 | 28.46 | Methyltrifluoropropylhydroxysiloxy-terminated methyltrifluoropropylpolysiloxane having a Williams Plasticity Number of 230 to 356 mm |
| | | |
| 3 | 2.32 | Dimethylvinylsiloxy-terminated polydimethyl(methylvinyl)siloxane having 1.88 mole percent MeViSiO units and a Williams Plasticity Number of 127 to 178 mm |
| | | |
| 4 | 7.53 | Dimethylvinylsiloxy-terminated polydimethylsiloxane having a Williams Plasticity Number of 140 to 165 mm |
| | | |
| 5 | 7.53 | Dimethylvinylsiloxy-terminated polydimethyl(methylvinyl)siloxane having 0.14 mole percent MeViSiO units and a Williams Plasticity Number of 140 to 165 mm |
| | | |
| 6 | 18.55 | Fumed reinforcing silica having a BET surface area of 225 m²/g |
| | | |
| 7 | 0.29 | Dimethylhydroxy-terminated polydimethyl(methylvinyl)siloxane described by formula H(OSiMeVi)ₘ(OSiMe₂)ₙOH where m and n are such that the material comprises 9.8 weight percent vinyl and 7 weight percent hydroxy |
| | | |
| 8 | 4.00 | Methyl(3,3,3-trifluoropropyl)hydroxysiloxy terminated methyl(3,3,3-tri-fluoropropyl)polysiloxane having a viscosity of 100 mPa·s at 25°C. |
| | | |
| 9 | 0.75 | Water |
| | | |
| 10 | ∗.∗∗ | Hexamethyldisilazane (HMDS), tetramethyldisilazane (TMDS) or a mixture of HMDS and TMDS as described in Table 2 |

**Table 2**

| Physical Properties Test Methods and Results | | | | |
|---|---|---|---|---|
| Physical Property | Test Method | Test Results | | |
| | | HMDS^{a} | TMDS^{b} | HMDS+TMDS^{c} |
| Durometer (Shore A) | ASTM D2240 | 39 | 44 | 45 |
| Tensile, MPa | ASTM 412 | 7.8 | 7.4 | 7.4 |
| Tear (Die B), kN/m | ASTM 625 | 20.7 | 28.9 | 27.1 |
| Elongation, % | ASTM 412 | 549 | 414 | 463 |
| Modulus (100%), MPa | ASTM 412 | 0.1 | 1.3 | 1.3 |
| Compression Set, % | ASTM 395 | 7 | 9.3 | 8.9 |
| Weight Gain, % | | - | 6.7 | 6.2 |

| | | | | |
|---|---|---|---|---|
| ^{a}2.08 weight parts hexamethyldisilizane (HMDS) | | | | |
| ^{b}2.08 weight parts tetramethyldisilazane (TMDS) | | | | |
| ^{c}1.58 weight parts HMDS + 0.5 weight parts TMDS | | | | |

## Claims

1. An organosiloxane composition comprising:
(A) 60 to 90 weight percent, based upon the combined weight of components (A) and (B), of a component consisting of at least one high-consistency fluorine-containing polydiorganosiloxane having a Williams Plasticity Number from 75 to 400 mm at 25°C, measured by ASTM Standard D926, which polydiorganosiloxane comprises at least two alkenyl radicals per molecule and repeating units described by formula R¹R^{f}SiO, where R¹ is an alkyl radical having from one to four carbon atoms and R^{f} is a perfluoroalkylethyl radical having from three to 12 carbon atoms;
(B) 10 to 40 weight percent, based on the combined weight of components (A) and (B), of a component consisting of at least one high consistency fluorine-free polydialkylsiloxane having a Williams Pasticity Number from 50 to 350 mm at 25°C, measured by ASTM Standard D926, which polydialkysiloxane comprises at least two alkenyl radicals per molecule, where the repeating units of the fluorine-free polydialkylsiloxane are described by formula R¹₂SiO and R¹ is as previously described; and
(C) 10 to 50 weight percent, based on the combined weight of components (A) and (B), of a reinforcing silica filler having a surface area of at least 50 m²/g; where the filler is treated with one to 50 weight percent, based on the weight of the reinforcing silica filler, of a silazane
characterized in that the silazane is a tetraalkyldisilazane described by formula R¹₂HSiNHSiR¹₂H, where R¹ is as previously described.

2. An organosiloxane composition according to claim 1 where component (A) contains at least one polydiorganosiloxane as described by formula 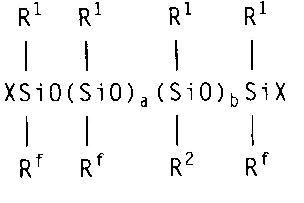 where R¹ is methyl and R^{f} is 3,3,3-trifluoropropyl, R² is an alkenyl radical comprising two to 10 carbon atoms, each X is independently selected from hydroxy or R², the sum of a and b is selected such that component (A) has a Williams Plasticity Number of 75 to 400 mm at 25°C. and the value of b/(a+b) is from 0 to 0.03, with the proviso that when X is a hydroxy group, b is at least 2.

3. A composition according to claim 2 where component (A) is a mixture comprising 20 to 60 weight percent of hydroxyterminated fluorine-containing polydiorganosiloxanes with b=0 and 40 to 80 weight percent of hydroxyterminated fluorine-containing polydiorganosiloxanes where b/(a+b) is an average value within a range of 0.001 to 0.02.

4. A composition according to claim 3 where component (A) is a mixture comprising 50 weight percent of a hydroxyterminated fluorine-containing polydiorganosiloxane where b is 0 and 50 weight percent of hydroxy-terminated fluorine-containing polydiorganosiloxane where b/(a+b) is a value within a range of 0.001 to 0.02.

5. A composition according to any of claims 1-4 where component (B) contains at least one polydiorganosiloxane described by formula 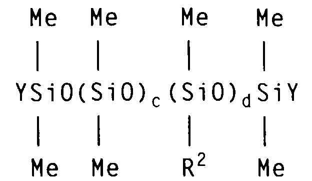 where Me is methyl, R² is an alkenyl radical comprising two to 10 carbon atoms as previously described, each Y is independently selected from hydroxy or R², the sum of c and d is selected such that component (B) has a Williams Plasticity Number within a range of 50 to 350 mm at 25°C. and the value of d/(c+d) is from 0 to 0.03, with the proviso that d is at least 2 when Y represents a hydroxy group.

6. A composition according to claim 5 where component (B) is a mixture comprising fluorine-free dimethylsiloxanes where Y is vinyl and d is zero and fluorine-free dimethylsiloxanes where Y is vinyl and d/(c+d) is a value of 0.002.

7. A composition according to any of claims 1-6 where the reinforcing silica filler is treated with 5 to 15 weight percent, based on the weight of said filler, of tetraalkyldisilazane.

8. A composition according to any of claims 1-7 further comprising 0.5 to 10 weight percent, based on the weight of the reinforcing silica filler, of a hydroxy-terminated methylvinylsiloxane treating agent described by formula 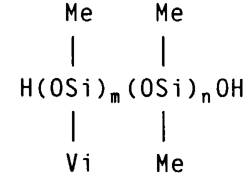 where Me is methyl, Vi is vinyl, m is a value from 1 to 8, n is a value from 0 to 7 and m+n is a value of 5 to 8.

9. A composition according to any of claims 1 to 8 further comprising an organic peroxide in an amount sufficient to effect curing of the composition.

10. A composition according to any of claims 1-8 further comprising a platinum-group metal hydrosilation catalyst and an organohydrogensiloxane crosslinker in amounts sufficient to effect curing of the composition.

11. A composition according to claim 10 where the composition is packaged in two parts with the platinum group metal-containing catalyst in one part and the organohydrogensiloxane in a second part.

12. An elastomer obtainable from the composition of any of claims 9 or 11.

## Patentansprüche

1. Organosiloxanzusammensetzung, enthaltend:
(A) 60 bis 90 Gew.-%, bezogen auf das Gesamtgewicht der Komponenten (A) und (B), einer Komponente, die aus mindestens einem hochkonsistenten fluorhaltigen Polydiorganosiloxan mit einer Williams-Plastizitätszahl von 75 bis 400 mm bei 25°C, gemessen gemäß ASTM-Standard D926, besteht, das mindestens zwei Alkenylreste pro Molekül und Struktureinheiten enthält, die durch die Formel R¹R^{f}SiO beschrieben werden, worin R¹ ein Alkylrest mit 1 bis 4 Kohlenstoffatomen ist und R^{f} ein Perfluoralkylethylrest mit 3 bis 12 Kohlenstoffatomen ist,
(B) 10 bis 40 Gew.-%, bezogen auf das Gesamtgewicht der Komponenten (A) und (B), einer Komponente, die aus mindestens einem hochkonsistenten fluorfreien Polydialkylsiloxan mit einer Williams-Plastizitätszahl von 50 bis 350 mm bei 25°C, gemessen gemäß ASTM-Standard D926, besteht, das mindestens zwei Alkenylreste pro Molekül enthält, wobei die Struktureinheiten des fluorfreien Polydialkylsiloxans durch die Formel R¹₂SiO beschrieben werden und R¹ wie zuvor definiert ist, und
(C) 10 bis 50 Gew.-%, bezogen auf das Gesamtgewicht der Komponenten (A) und (B), eines verstärkenden Siliciumdioxidfüllstoffs mit einer Oberfläche von wenigstens 50 m²/g, wobei der Füllstoff mit 1 bis 50 Gew.-%, bezogen auf das Gewicht des verstärkenden Siliciumdioxidfüllstoffs, eines Silazans behandelt ist,
dadurch gekennzeichnet, daß das Silazan ein Tetraalkyldisilazan ist, das durch die Formel R¹₂HSiNHSiR¹₂H wiedergegeben ist, worin R¹ wie zuvor beschrieben ist.

2. Organosiloxanzusammensetzung nach Anspruch 1, wobei Komponente (A) mindestens ein Polydiorganosiloxan, wie durch Formel 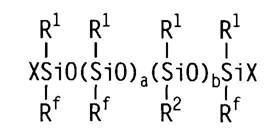 beschrieben, enthält, worin R¹ Methyl ist und R^{f} 3,3,3-Trifluorpropyl ist, R² ein Alkenylrest mit 2 bis 10 Kohlenstoffatomen ist, jedes X unabhängig voneinander ausgewählt ist aus Hydroxy oder R², die Summe von a und b so gewählt ist, daß Komponente (A) eine Williams-Plastizitätszahl von 75 bis 400 mm bei 25°C aufweist und der Wert von b/(a+b) von 0 bis 0,03 reicht, unter der Voraussetzung, daß, wenn X eine Hydroxygruppe ist, b mindestens 2 ist.

3. Zusammensetzung nach Anspruch 2, wobei Komponente (A) eine Mischung ist, die 20 bis 60 Gew.-% fluorhaltige Polydiorganosiloxane mit Hydroxyendgruppen mit b=0 und 40 bis 80 Gew.-% fluorhaltige Polydiorganosiloxane mit Hydroxyendgruppen, worin b/(a+b) ein Mittelwert innerhalb eines Bereichs von 0,001 bis 0,02 ist, enthält.

4. Zusammensetzung nach Anspruch 3, wobei Komponente (A) eine Mischung ist, die 50 Gew.-% fluorhaltiges Polydiorganosiloxan mit Hydroxyendgruppen enthält, worin b=0 ist, und 50 Gew.-% fluorhaltiges Polydiorganosiloxan mit Hydroxyendgruppen, worin b/(a+b) ein Wert innerhalb eines Bereichs von 0,001 bis 0,02 ist.

5. Zusammensetzung nach einem der Ansprüche 1 bis 4, worin Komponente (B) mindestens ein Polydiorganosiloxan beschrieben durch die Formel 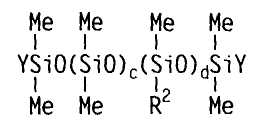 enthält, worin Me Methyl ist, R² ein Alkenylrest mit 2 bis 10 Kohlenstoffatomen wie zuvor definiert ist, jedes Y unabhängig voneinander ausgewählt ist aus Hydroxy oder R², die Summe von c und d so gewählt ist, daß Komponente (B) eine Williams-Plastizitätszahl innerhalb eines Bereichs von 50 bis 350 mm bei 25°C aufweist und der Wert von d/(c+d) von 0 bis 0,03 reicht, unter der Voraussetzung, daß d mindestens 2 ist, wenn Y eine Hydroxygruppe darstellt.

6. Zusammensetzung nach Anspruch 5, wobei Komponente (B) eine Mischung ist, die fluorfreie Dimethylsiloxane, worin Y gleich Vinyl ist und d gleich null ist, und fluorfreie Dimethylsiloxane, worin Y gleich Vinyl ist und d/(c+d) einen Wert von 0,002 aufweist, enthält.

7. Zusammensetzung nach einem der Ansprüche 1 bis 6, wobei der verstärkende Siliciumdioxidfüllstoff mit 5 bis 15 Gew.-%, bezogen auf das Gewicht des Füllstoffs, Tetraalkyldisilazan behandelt ist.

8. Zusammensetzung nach einem der Ansprüche 1 bis 7, die weiterhin 0,5 bis 10 Gew.-%, bezogen auf das Gewicht des verstärkenden Siliciumdioxidfüllstoffs, eines Methylvinylsiloxanbehandlungsmittels mit Hydroxyendgruppen enthält, das durch die Formel 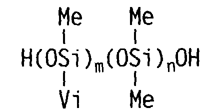 beschrieben ist, worin Me gleich Methyl ist, Vi gleich Vinyl ist, m ein Wert von 1 bis 8 ist, n ein Wert von 0 bis 7 ist und m+n ein Wert von 5 bis 8 ist.

9. Zusammensetzung nach einem der Ansprüche 1 bis 8, die weiterhin ein organisches Peroxid in einer Menge enthält, die ausreichend ist, um die Härtung der Zusammensetzung zu bewirken.

10. Zusammensetzung nach einem der Ansprüche 1 bis 8, die weiterhin einen Hydrosilylierungskatalysator mit einem Metall der Platingruppe und einen Organowasserstoffsiloxanvernetzer in Mengen enthält, die ausreichend sind, um die Härtung der Zusammensetzung zu bewirken.

11. Zusammensetzung nach Anspruch 10, wobei die Zusammensetzung in zwei Teilen verpackt ist, wobei der Katalysator, der das Metall der Platingruppe enthält, in einem Teil und das Organowasserstoffsiloxan in einem zweiten Teil vorliegt.

12. Elastomer, das aus der Zusammensetzung nach einem der Ansprüche 9 oder 11 erhältlich ist.

## Revendications

1. Une composition d'organosiloxanes comprenant :
(A) 60 à 90 pour cent en poids, par rapport au poids total des composants (A) et (B), d'un composant qui consiste en au moins un polydiorganosiloxane fluoré à forte consistance ayant un Indice de Plasticité Williams de 75 à 400 mm à 25°C, mesuré selon la norme ASTM D926, ce polydiorganosiloxane comprenant au moins deux radicaux alcényles par molécule et des motifs récurrents décrits par la formule R¹R^{f}SiO où R¹ est un radical alkyle ayant 1 à 4 atomes de carbone et R^{f} est un radical perfluoroalkyléthyle ayant 3 à 12 atomes de carbone ;
(B) 10 à 40 pour cent en poids, par rapport au poids total des composants (A) et (B), d'un composant qui consiste en au moins un polydialkylsiloxane non fluoré à forte consistance ayant un Indice de Plasticité Williams de 50 à 350 mm à 25°C, mesuré selon la norme ASTM D926, ce polydialkylsiloxane comprenant au moins deux radicaux alcényles par molécule, les motifs récurrents du polydialkylsiloxane non fluoré étant décrits par la formule R¹₂SiO et R¹ est tel que décrit précédemment ; et
(C) 10 à 50 pour cent en poids, par rapport au poids total des composants (A) et (B), d'une charge de silice de renforcement ayant une surface spécifique d'au moins 50 m²/g, la charge étant traitée par 1 à 50 pour cent en poids, par rapport au poids de la charge de silice de renforcement, d'un silazane
caractérisée en ce que le silazane est un tétraalkyldisilazane décrit par la formule R¹₂HSiNHSiR¹₂H, où R¹ est tel que décrit précédemment.

2. Une composition d'organosiloxanes selon la revendication 1, dans laquelle le composant (A) contient au moins un polydiorganosiloxane tel que décrit par la formule 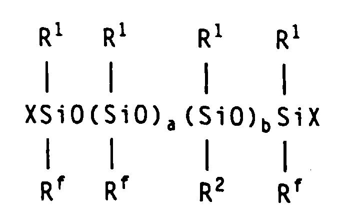 où R¹ est un radical méthyle et R^{f} est un radical 3,3,3-trifluoropropyle, R² est un radical alcényle comprenant 2 à 10 atomes de carbone, chaque X est choisi indépendamment parmi les groupes hydroxyle ou R², la somme de a et b est choisie de telle manière que le composant (A) ait un Indice de Plasticité Williams de 75 à 400 mm à 25°C et la valeur de b/(a+b) est de 0 à 0,03, avec la condition que lorsque X est un groupe hydroxyle, b soit au moins 2.

3. Une composition selon la revendication 2, dans laquelle le composant (A) est un mélange comprenant 20 à 60 pour cent en poids de polydiorganosiloxanes fluorés à terminaison hydroxyle où b=0 et 40 à 80 pour cent en poids de polydiorganosiloxanes fluorés à terminaison hydroxyle où b/(a+b) est une valeur moyenne comprise dans un intervalle de 0,001 à 0,02.

4. Une composition selon la revendication 3, dans laquelle le composant (A) est un mélange comprenant 50 pour cent en poids d'un polydiorganosiloxane fluoré à terminaison hydroxyle où b est 0 et 50 pour cent en poids d'un polydiorganosiloxane fluoré à terminaison hydroxyle où b/(a+b) est une valeur comprise dans un intervalle de 0,001 à 0,02.

5. Une composition selon l'une quelconque des revendications 1 à 4, dans laquelle le composant (B) contient au moins un polydiorganosiloxane décrit par la formule 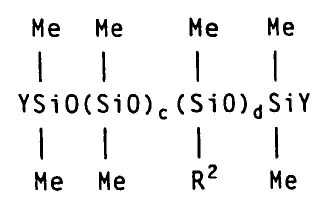 où Me est un radical méthyle, R² est un radical alcényle comprenant 2 à 10 atomes de carbone tel que décrit précédemment, chaque Y est choisi indépendamment parmi un groupe hydroxyle ou R², la somme de c et d est choisie de telle manière que le composant (B) ait un Indice de Plasticité Williams compris dans un intervalle de 50 à 350 mm à 25°C, et la valeur de d/(c+d) est de 0 à 0,03, avec la condition que d soit au moins 2 lorsque Y représente un groupe hydroxyle.

6. Une composition selon la revendication 5, dans laquelle le composant (B) est un mélange comprenant des diméthylsiloxanes non fluorés où Y est un radical vinyle et d est zéro et des diméthylsiloxanes non fluorés où Y est un radical vinyle et la valeur de d/(c+d) est 0,002.

7. Une composition selon l'une quelconque des revendications 1 à 6, dans laquelle la charge de silice de renforcement est traitée par 5 à 15 pour cent en poids, par rapport au poids de ladite charge, de tétralkyldisilazane.

8. Une composition selon l'une quelconque des revendications 1 à 7, comprenant de plus 0,5 à 10 pour cent en poids, par rapport au poids de la charge de silice de renforcement, d'un agent de traitement qui est un méthyl-vinylsiloxane terminé par des groupes hydroxyle décrit par la formule 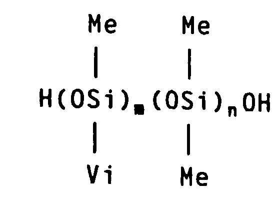 où Me est un radical méthyle, Vi est un radical vinyle, m est une valeur de 1 à 8, n est une valeur de 0 à 7 et m+n est une valeur de 5 à 8.

9. Une composition selon l'une quelconque des revendications 1 à 8, comprenant de plus un peroxyde organique en une quantité suffisante pour effectuer un durcissement de la composition.

10. Une composition selon l'une quelconque des revendications 1 à 8, comprenant de plus un catalyseur d'hydrosilylation à métal du groupe du platine et un agent de réticulation du type organohydrogénosiloxane en des quantités suffisantes pour effectuer un durcissement de la composition.

11. Une composition selon la revendication 10, dans laquelle la composition est emballée en deux parties, le catalyseur contenant un métal du groupe du platine étant dans une première partie et l'organohydrogénosiloxane dans une seconde partie.

12. Un élastomère pouvant être obtenu à partir de la composition de l'une quelconque des revendications 9 ou 11.
